(19)

Europäisches
Patentamt

European
Patent Office

Office européen
des brevets

(11) **EP 4 575 545 A1**

(12) **EUROPEAN PATENT APPLICATION**

(43) Date of publication:
25.06.2025 Bulletin 2025/26

(21) Application number: 23219631.1

(22) Date of filing: 22.12.2023

(51) International Patent Classification (IPC):
*G01S 5/00* $^{(2006.01)}$   *G08G 1/16* $^{(2006.01)}$

(52) Cooperative Patent Classification (CPC):
**G01S 5/0072; G01S 5/0284; G01S 5/0294;**
**G01S 5/12; G08G 1/161; G08G 1/166;**
G01S 2205/01

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventors:
- **PFLUG, Hans Willem**
  **Eindhoven (NL)**
- **SMEARS, Nicholas**
  **Eindhoven (NL)**

(74) Representative: **Philips Intellectual Property &**
**Standards**
**High Tech Campus 52**
**5656 AG Eindhoven (NL)**

(54) **USER COLLISION AVOIDANCE**

(57)     Thus there is provided a method and appropriately arranged devices for An apparatus for reduction of a risk of a collision between a first user and a second user, the apparatus being located in a vicinity of the first user and arranged to cooperate with a second apparatus in the vicinity of the second user. The apparatus comprises a first transceiver, being arranged to exchange first and second messages with a second transceiver comprised in the second apparatus, a first processor operationally coupled to the first transceiver. The first processor is arranged to communicate with the second processor via the first transceiver and the first processor is arranged to cause the first transceiver to participate with the second transceiver in making a first measurement, using the messages, the first measurement comprising a distance value, the distance value representing a distance between the first and second users, and an angle value, the angle value representing an angle of arrival (AoA) of the second message, the second message coming from the second transceiver and obtain, based on the first measurement and a velocity of the first apparatus, an estimate of a possible collision between the first and second users and communicate at least one selected from the group of the estimate and the first measurement to the second processor.

Fig. 1

EP 4 575 545 A1

**EP 4 575 545 A1**

**Description**

FIELD OF THE INVENTION

The present invention relates to devices and methods for reducing collision risks, particularly between persons and vehicles.

BACKGROUND OF THE INVENTION

As populations rise, public spaces are becoming more crowded. A consequence of this is that collisions between moving people or between people and moving objects are becoming more likely. Collisions involving automobiles spring to mind, particularly when they involve an automobile and persons who do not also have the protection of an automobile, such as pedestrians, cyclists, motorcyclists and personal mobility aids, because the consequences of a collision may be very serious for the less-protected person. Risks of collisions are increased by the presence of distractions such as reading a phone while moving and the high cognitive load often placed on people in general. It is desirable, therefore, to provide a way of anticipating possible collisions and warn the persons concerned.

SUMMARY OF THE INVENTION

In an attempt to lower the risks of collisions, there are provided apparatuses, methods and computer program products according to the appended claims.
Using ranging apparatuses according to embodiments and variants to measure relative trajectories of two or more users allows estimates of the risks of collisions to be obtained. The apparatuses (i.e. ranging devices) are arranged to advertise their presence and, when one device detects another, they are arranged to set up an ad-hoc network using ephemeral ID's and negotiate roles. The ranging devices are arranged to measure distances between themselves and angles-of-arrival of one or more message and from this calculate their relative trajectories and velocities. From this information, they may establish a prediction for their distance of closes approach and the moment that this will occur. From this prediction, a collision risk estimate may be established and compared to thresholds to determine whether or not to generate an alert for one or more of the users. Comparison with a first threshold allows one or both of the devices to decide whether or not to carry on measuring. Comparison with another threshold allows one or both of the devices to make a decision on triggering the alert. The system and methods require a technology which is highly accurate and which gives quick responses. Ultra-Wide Band based on IEEE802.15.4z offers the benefits of being accurate and having low latency. The advantages of a point-to-point system according to embodiments over a one based on a cellular network are agility and accuracy.
Many users are concerned about privacy and having their location tracked. Additionally, systems and methods according to embodiments allow user to maintain privacy by avoiding explicit tracking and centralized location logging as would be the case with a cellular network-based solution.
It is beneficial to ensure that the angular measurements are as accurate as possible, since these have a significant influence on the estimate of velocity and the closes-approach distance and time. By making the angle measurements using the wider of the two antenna arrays, it may be possible to achieve better accuracy. In the case of vehicle, the antennae will often be distributed around the periphery of the vehicle, yielding an antenna array much wider than for a telephone, for example. Thus, the devices are arranged to negotiate which of them will provide the angular measurements.
When a ranging device observes two other ranging devices, it may calculate both their trajectories and, where it notes the presence of an object obstructing communication between those two other ranging device, it may communicate one or more of the presence, location and trajectory of one ranging device to the other.
Depending on their mode of transport, users may be at different levels of risk of injury from a collision and they may present different levels of risk for the other users. For example, automobile users have some protection from their vehicle but have a large capacity to injure others whereas pedestrians are pretty much in the opposite situation. Users may thus be categorized according to these characteristics, for example ranging from 'high protection for the user, high risk for other users' to 'low protection for the user, low risk to others'. The severity (or urgency) of the collision estimate may be adjusted according to the categories of user involved, having the effect of making the generation of an alert more likely whenever a 'high risk for others' category is involved - or when a high risk for other and a low protection for the user risk colliding. This has the advantage that alerts may be more focused i.e. generated more when needed and less when not needed which will contribute to the system not being ignored by users. Also, the category or the category combination may be used to modulate the severity/urgency of the alert itself.

BRIEF DESCRIPTION OF THE DRAWINGS

The above, as well as additional objects, features and advantages of the disclosed devices, systems and methods, will be better understood through the following illustrative and non-limiting detailed description of embodiments of devices and methods, with reference to the appended not-to-scale drawings, in which:

Fig. 1 represents a possible situation where devices according to embodiments are in motion in a same space.
Fig. 2 represents a flow of communication between devices according to embodiments.
Fig. 3 represents two devices according to embodiments in communication.
Fig. 4a represents a simplified case of measurement of angle of arrival of a message.
Fig. 4b represents an illustration of the importance of error in angle measurements.

DETAILED DESCRIPTION OF THE EMBODIMENTS

In the following description, same references designate like elements.
Throughout this disclosure and the appended claims, the term 'velocity' should be understood to mean the vector quantity i.e. having speed and direction. The term 'radio' indicates a communications radio having the ability to send and receive messages.

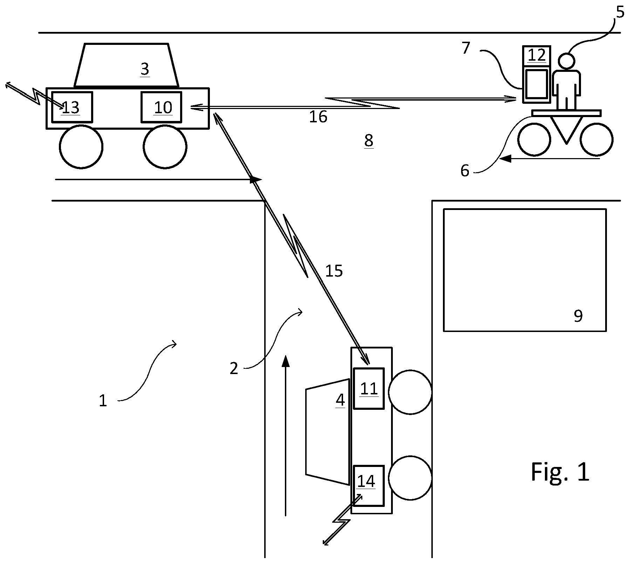

Fig. 1 represent an exemplary situation. There is a public space 1 where there is a road 2. Along this road 2 are traveling a first vehicle 3, a second vehicle 4 and a person 5, using a bicycle 6. The person 5 is carrying a device such as a smartphone 7. The first and second vehicles 3, 4 and the person 5 are all travelling towards a junction 8. The line of sight between the second vehicle 4 and the person 5 is blocked by a building 9. There is a risk, therefore, that one or other of the vehicles 3, 4 and the person 5 collide. The term 'user' may be understood to mean a person. The example presented here is a road. However, invention is applicable to many other situations, such as corridors in buildings, parks and the like.
As may be readily understood, the risk of injury depends on the degree of protection a person has and the mass and speed of the other party involved in the collision. Broadly, moving persons (i.e. users) may be grouped into five categories as follows, in order of increasing risk of injury;

1. Train users (very high speed & mass)
2. automobile users (high speed & mass)
3. motorcycle users (high speed and intermedia mass)
4. mobility aid users/cyclists (moderate speed and mass)
5. pedestrians (low speed and low mass)

As is also readily understood, the potential to cause injury increases as one moves from a higher order to a lower order group, broadly speaking - a 'group 2 user' (such as a car) will probably inflict more damage on a 'group 3 user' (such as a cyclist) than they will suffer in return. Therefore, whilst preventing collisions between any persons is desirable, it is more so when a person in a higher order (i.e. higher number) group is at risk of colliding with one in a lower order group.
It should be understood that, though the present example is presented in terms of a road, the methods, devices and systems herein are equally applicable to other situations such as footpaths, railroad junctions, corridors and the like. Furthermore, whilst the example shows a cyclist and automobiles, the forms transportation may be other forms such as wheelchairs, mobility vehicles, pushchairs, motorcycles, trains or even just walking.
According to an embodiment, the first and second vehicles 3, 4 may be equipped with respective ranging devices 10, 11 and the user 5 may be carrying a ranging device 12 of the same type. This may be incorporated into the smartphone 7 or arranged to communicate with the smartphone 7. The user 5 is shown as using a bicycle 6 by way of illustrating the different categories of user. The vehicles 3, 4 may also be equipped with respective cellular radios 13, 14. The first and ranging devices 10, 11 enable users (not shown) of the first and second vehicles 3, 4 to enter into communication (represented by the symbol 15) . In a similar manner, the first vehicle 3 and the user 5 may also enter into communication using their respective ranging devices (represented by the symbol 16). The term 'ranging' is used herein to designate a principal element of their function and not does not limit their functionality to ranging, distance measurement and the like - indeed they are arranged to transmit and receive data. These ranging devices may use a short-range communications technology. 'Short-range' is used here in contrast with 'long-range' such as cellular communications - but this does not imply a specific limitation on the range of transmission and reception.
As will become clear, the ranging devices 10, 11, 12 may be used, according to an embodiment, for estimating the relative location of other ranging devices of the same type. Thus, a user using of one of the vehicles 3, 4 (or indeed the vehicles 3, 4, themselves) and the user 5 have respective ranging devices 10, 11 and 12, in their vicinity or associated with them - in other words, those respective ranging devices 10, 11 and 12 are arranged to travel with the user concerned. It should be understood that a given ranging device may be in communication with multiple other ranging devices at the same time.

It could be envisaged to have a service use the cellular communications network connected to the cellular radios 13, 14 and the smartphone 7 to provide a location and tracking service to follow the trajectories of the various people. From those trajectories, the service could predict collisions and alert the various users. This solution seems attractive in that it makes use of infrastructure which (to a certain extent) already exists and is (presumably) already being paid for by the users. Indeed, provision is being made in newer cellular communication systems for location determination. Such a solution would be attractive in that it should be easy to provide the necessary computing power - since the servers could be remote. It should be noted that, the tracking service and collision-prediction service would have to be provided expressly since these are not a native part of the telecommunications network. As such, they would have to be subscribed to and require administration.

Nevertheless, the inventors have realized that such a centralized system presents certain drawbacks. Such a system would involve tracking individuals who would be identifiable by their subscriber identities (SI). However, a large number of people who are concerned about privacy and do not want this. Such people may have turned the fine-location services off on their cellular phones, making estimating the collision risk at best much less accurate, if not impossible.

Secondly, such a system might have a high latency, at least in situations of high load. To obtain accurate position measurements, cellular systems use multiple measurement points (e.g. multiple base-stations), making the whole process of determining the position slower. Whilst such techniques may serve well for tracking groups of cellular radios which are moving in a relatively cohesive manner i.e. with similar velocities (such as a platoon of vehicles), the more random nature of interactions between difference categories of user (they move in an out of range of each other in a less ordered manner) may present challenges. Indeed, the inventors have understood that situations where people are converging on junctions, particularly in mixed modes of transport, merit particular attention. When the parties are further apart, tracking them over longer distances using the cellular system would be an option. This would then allow any errors in individual measurements of their location or velocity to be averaged out, as it were. Also, there would be less need to obtain the measurements quickly. However, the inventors have realized that this approach cannot be relied on for situations where the parties involved are already close to each other - for instance within 10's or low 100's of meters. In other words, the measurements should be inherently accurate and obtainable quickly, i.e. with low latency.

The inventors have made the counterintuitive realization that a much simpler, ad-hoc connection, approach is desirable and that relative locations between the various parties can suffice. Therefore, according to an embodiment, direct or peer-to-peer (P2P) style connections performing point-to-point location measurements between the users themselves are used. These measurement may then be used by one or more devices in the vicinity of the respective users to estimate the chance that those users arrive at the same place at the same time i.e. that they collide. Also, the need for tracking will often be short-lived and sporadic - once the parties have passed each other or changed direction (which will probably occur within a short time period), there will be no longer any need to track each other. Indeed, for reasons of privacy, many users will desire that the tracking stop - which is easier to assure with an ad-hoc, P2P type of connection.

There are various well established short-range wireless technologies available such as Bluetooth™ (BT) and IEEE802.11 (Wi-Fi™), both of which support point-to-point or P2P modes and both of which support distance (or ranging) techniques. These are attractive in that there is a wide installed base - indeed many of the devices that would be needed for an alert system already have one or more of them. However, Ultra-Wide-Band (UWB ) ranging, as based on IEEE802.15.4z presents certain advantages over these. Bluetooth™ has only about 30m of range and the accuracy of the measurements is reported as being a few meters . W-Fi™ does have up to 300m of range and a reported accuracy of a few meters, also. UWB ranging has a range of up to 200m and a reported accuracy of a few tens of cm. Furthermore, the measurements in UWB are reported to take a few milliseconds each whereas seconds are reportedly needed in both Wi-Fi™ and Bluetooth™. Thus, despite the extra cost and complexity, in a variant, the point-to-point communication is based on the UWB variant of IEEE802.15.4. An advantage of the UWB variant of IEEE802.15.4 is that it provides round-trip timing (RTT) measurement for distance measurement. This technique provides greater accuracy and repeatability than technique based on received-signal strength (RSSI), as used by some other communications technologies.

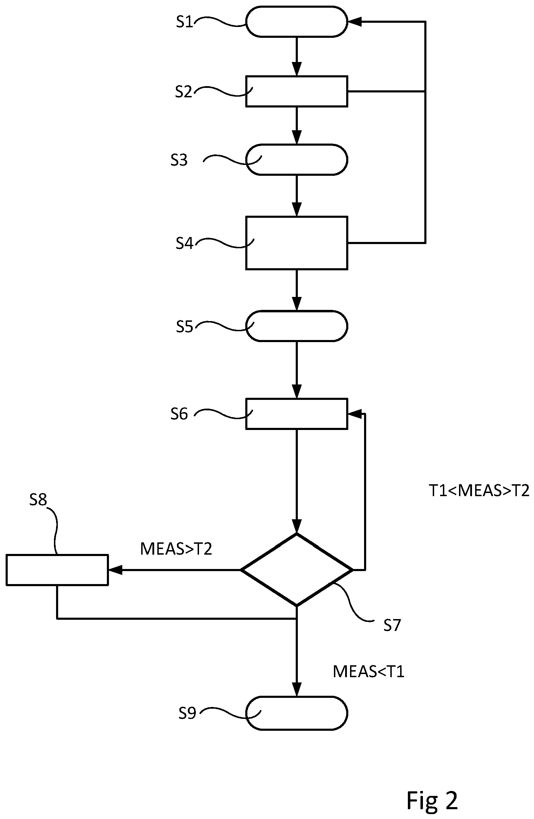

Fig. 2 represents a flow of a process for ranging devices according to an embodiment such as those depicted in Fig. 2 i.e. elements 10, 11 and 12. At, S1, the devices are in an initial state and have no open connections to other devices of their type. At S2 they emit periodic announcement messages to indicate their presence to any other devices in the vicinity, such as beacons. They also listen for such announcement messages. At S3, one or both of the ranging devices detects an announcement message from the other ranging device and enters an 'announcement detected' state. At S4, the two devices execute a connection protocol whereby the two ranging devices acquire an identification (ID) for each other. Preferably, the ID's will be ephemeral but will last for the duration of the connection.

Whenever a new connection is established, a given device will generate or choose a new ID. This has the advantage that it will be more difficult to track a particular ranging device (and hence the user using it) which many people are concerned about. Such tracking might occur in a situation where ranging devices according to an embodiment have been positioned around the place expressly for this purpose or if malicious code has been introduced into otherwise 'innocent' devices. Various methods exist for generating the ephemeral ID such as using a (pseudo)-random number (PRN) generator, either alone or added to another quantity and then, optionally, hashed (e.g. a salted hash). Since it is possible that such a device will be called upon to generate ephemeral IDs very frequently and have multiple ones active, it is desirable to ensure that a same ID is not used twice in close succession - otherwise devices attempting to track other devices might correctly infer that two identical IDs that appear close together in time in a given area are, in fact, the same ranging device. Therefore, techniques such as using a PRN generator which does not repeat too often or using a seed for the generator which also varies (such as a time-stamp) may be desirable.

It may introduce confusion should a ranging device receive an ID for one ranging device that it already has registered for yet another ranging device. If the two connections are active, both other ranging devices will think a given message is for them and, more importantly, it will not be able to distinguish between messages from the two other ranging devices. Since it is unlikely that these two other ranging devices are co-located, this will cause significant errors in calculations of trajectories. Therefore, it may be useful for a ranging device according to a variant, to reject a request to connect which proposes an ID that it has already for a current active connection - or that it has recently used within a time-window - a lock-out period, in other words. This lock-out period may be preset or selectable according to a parameter such as the current speed of the ranging device making the decision - for example, the speed could be used to infer the type of transport the ranging device was in. A pedestrian user may receive a high number of connections in a short period of time, because of the density of other ranging devices. This increases the likelihood of a duplicate ID being received and so a longer lock-out time may be useful. On the other hand, a vehicle will be further apart from other ranging devices and (probably) receive fewer connection requests. However, the speed of the vehicle may well lead to dropped connections which remake quite quickly. This and the propensity of the vehicle to do damage may mean that a lower lock-out time, meaning that the generation of an alert is more likely, may be desirable.

If a ranging device accepts the ID, the process progresses to S5 where the connection or session is established. On the other hand, if the ranging device rejects the ID, it may signal the other ranging device of the ID rejection. The other ranging device may then present a new ID or drop the attempt to connect and respond with a 'connection fail' message.

At S6, one or other of the ranging devices initiates one or more ranging measurements to estimate the distance between the ranging devices and the angle-of-arrival (AoA) of the messages. From the one or more distance and AoA results, one or other of the ranging devices (or a processor coupled to it) may estimate a risk of collision. The estimate may be based on a predicted distance of closest approach and the predicted time at which this will occur. The lower the closest-approach distance and the lower the time to occurrence, the higher the risk estimate.

At S7, the estimate may be compared to first and second thresholds, T1 and T2. If the estimate is found to be below T1, the ranging device may decide that the risk of collision is low enough to not continue measurements. It may then signal this the other ranging device - the process passes to S9 directly where the connection (or session) is terminated. If the estimate is between the two thresholds, the connection is maintained and the process returns to S6 where one or more measurements are made and one or more estimates of the collision risk are obtained. At some point later, the new estimate(s) are compared to the thresholds at S7 again. If the estimate is below T1, the procedure is terminated and if the estimate is between T1 and T2, the process returns to S6 and so on. If the estimate is found to be greater than the second threshold T2, the process passes to S8 where an alert is generated. The process may then pass to S9. Optionally, in a variant, the ranging devices may be arranged for the process to return to S6 for one or more times where the estimate exceeds the second threshold, T2. This option may be used as part of increasing the urgency or severity of the alert.

Lowering T2 will have the effect of making the system more sensitive i.e. more likely to generate an alert for a given situation. Raising T2 will have the opposite effect. In other words, this adjustment changes the false positive rate (FPR) - higher T2 means a lower FPR. Raising or lowering T1, controls the false negative rate (FNR). That said, since the situation is dynamic, it also has an influence on the sensitivity in that with a higher T1, more instances will be ignored at the outset that could, in the end, become collision risks above T2 - in other words T1 also influences the True Positive Ration (TPR). Thus, in a variant, it may be useful to allow the user to adjust the threshold levels, particularly for a category 4 or 5 user (pedestrian, bicycle) who will often be using a phone to interface with the ranging device. As with the alert settings, this may be conveniently arranged as part of the device settings. There may be provided a 'sensitivity' setting (high/-medium/low or a slider) which has the effect of adjusting one or both of thresholds up and down. In a variant, there may be a 'sensitivity' and 'accuracy' settings where the sensitivity setting adjusts both thresholds in the same direction and the accuracy setting changes only T2. This would allow the user to adapt the system to their particular situation and needs and typical usage - for example, high sensitivity for someone vulnerable/distracted. Allowing this would reduce the risk of users ignoring or switching off the system. The initial thresholds for T1 and T2 may be set at 30% and 70% of full-range for the collision risk estimate.

In an alternative, a ranging device calculating a collision risk estimate may adjust and apply a severity weighting to the estimate. The severity weighting may be based on an evaluation of the user categories of the user with which the ranging devices are associated. The evaluation may be based on either the involvement of a high order category or a low order category or, rather, the presence of a difference in the categories - for example a vehicle and a cyclist or pedestrian. The severity weighting may also be used to modulate the intensity of the alert itself - for example, louder, brighter, with a stronger vibration and so on. This has the advantage of better 'tuning' the alerts to real needs - making them more targeted in other words. As mentioned previously, it is desirable that the alerts be perceived as useful and not a simple annoyance. Therefore, reducing the frequency and/or intensity of alerts when they are less needed (e.g. two vehicles or two pedestrians) may help to encourage users to pay heed to the alerts.

The alert may be communicated in a number of ways - for example, by a sound or spoken announcement ("warning : collision predicted" or similar) or by a visual notification or by a haptic notification (e.g. a vibration) or a combination two or more of these. Increasing urgency of the alert could be communicated by increasing the stimulation level of the alert. Where the ranging device is part of a phone or interfaces with the user by a phone, it may be useful to rely more on auditory and haptic alert types, since the user 5 may have the phone in a pocket. For flexibility, it may be more convenient for the ranging device to output an alert trigger and (if used) the severity and arrange the device providing the user interface (U1) to select the exact form of the alert, since that device will often be configured according to its typical use (i.e. as a car infotainment/control system or a phone being configured by its user. In the case of a phone, it may be useful to provide options in the operating system for configuring the alerts - for example, as part of the 'notifications' settings. This allows users to adjust the degree of disturbance the alerts present for them to their needs, reducing the risk that they ignore them or switch them off altogether.

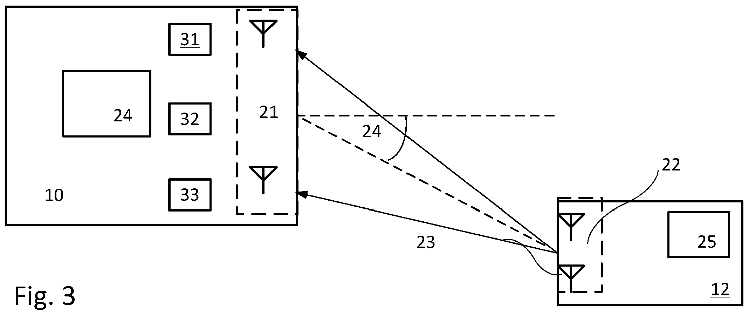

Fig. 3 represents two ranging devices 10 and 12 in the process of measuring a distance between them and calculating an angle of arrival of a message at one of the ranging devices. The devices 10, 12 may have respective antenna arrays 21, 22 and respective processors 24, 25. The processors 24, 25 may be arranged to control the ranging devices, encode and decode messages, perform calculations and communicate with other equipment such as smartphones and vehicle information systems and, in particular, equipment that has a user interface for alerting a user. Messages may pass between the ranging devices along paths represented by the arrows 23. Though the drawing is not to scale, it may be appreciated that there is a difference in the path length between, for example the upper and lower antennae of array 22 and the antenna array 21. This results in a difference of arrival time of the message at one antenna as compared to the other antenna. This time difference may be used to calculate the angle 24 - the angle of arrival (or depending on the definition chosen, (90o - the angle of arrival)). As shown for ranging device 10, the ranging devices have a transceiver 31, a memory 32 and a communication interface 33 for communication with other devices such as the other hardware in a smartphone or the computers in a car. The transceiver 31 is arranged to provide receive chains for each antenna in the array such that the arrival time of a signal at each antenna may be measured. The memory 32 may be used for storing data, buffering messages in and out and the like. The communication interface 33 may be wired, wireless or accommodate both.

In summary, there is an apparatus for reduction of a risk of a collision between a first user and a second user, the apparatus being associated with (i.e. located in a vicinity of) the first user and arranged to cooperate with a second apparatus associated with (i.e. located in the vicinity of) the second user. The apparatus comprises a first transceiver, being arranged to exchange first and second messages with a second transceiver comprised in the second apparatus and a first processor operationally coupled to the first transceiver. The first processor is arranged to communicate with the second processor via the first transceiver and to cause the first transceiver to participate with the second transceiver in making a first measurement, using the messages, the first measurement comprising a distance value, the distance value representing a distance between the first and second users, and an angle value, the angle value representing an angle of arrival (AoA) of the second message, the second message coming from the second transceiver and to obtain, based on the first measurement and a velocity of the first apparatus, an estimate of a possible collision between the first and second users and communicate at least one selected from the group of the estimate and the first measurement to the second processor.

The transceiver is operationally coupled to at least two antennae, the at least two antennae being spatially separated. This allows the measurement of the angle of arrival.

The first and second transceivers may be arranged to use Ultra-Wide Band (UWB) communications according to IEEE802.15.4z and the first measurement is according to a UWB ranging protocol. This provides a system with high accuracy and low latency for quick estimations in a rapidly changing environment.

This may also be summarized as method for reduction of a risk of a collision between first and second users, where the method comprises using first and second apparatuses, the first and second apparatuses comprising respective first transceiver and second transceivers and first and second processors, the first and second apparatuses being located in the vicinity of the first and second users, respectively, to exchange first and second messages, using first and second processors, the first processor being operationally coupled to the first transceiver and the second processor being operationally coupled to the second transceiver, to cause the first and second transceivers to make a first measurement, using the first and second messages, the first measurement comprising a distance value, the distance value representing a distance between the first and second transceivers and an angle value, the angle value representing an angle of arrival of the message from the other transceiver and using one of the processors to obtain, based on the first measurement, an estimate of a possible collision between the vehicle and the user.

In the method, the obtaining of the estimate may comprise making a second measurement using further messages and using the first and second measurements to obtain a velocity of the other processor. At least one of the first and second transceivers is operationally coupled to an antenna array, the antenna array comprising at least two spatially separated antennae.

In the method, at least one of the first and second processors obtains an information of the antenna separation of the antenna array of the other apparatus and wherein the two apparatuses negotiate to select the apparatus with the greater antenna separation to provide the angle value in the measurement.

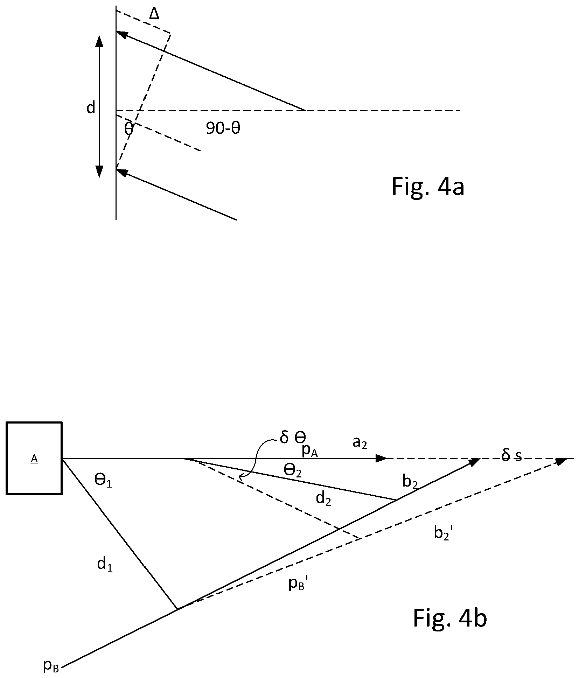

Fig. 4a shows a representation of the calculation of the angles. This has been simplified in order to illustrate an important principle. In this representation, the arriving wave-front has been approximated to a plane-wave arriving at two antenna separated by a distance, d. This situation would apply if the transmitter were at a great distance where beam would appear, for practical purposes, to be collimated. It can be shown that the time (or phase) difference $\Delta$ is given by:

$$\Delta = d.\cos(\theta) \qquad\qquad (1)$$

Thus, the greater the value of d, the greater the observed time/phase difference $\Delta$ for a given angle $\theta$. The measurement of $\Delta$ is derived from a difference of two timing-measurements, namely the arrival time of the signal at each of the two antenna. Each of these individual arrival time measurement may contain an error or uncertainty. These errors may have a systematic component and, since errors are in part due to external (and probably random) factors such as noise and interference, they will have a significant part not related to the measured value. Since the total errors in the two measurement are not correlated, these errors compound each other (rather than cancelling out) - this is usually calculated as a root-sum-square of the two errors. Consequently, the smaller the actual value of $\Delta$, the greater that final error is in relation to the derived value of $\Delta$. Hence, the accuracy of the determination of $\theta$ is improved directly with increased separation of the antennae. This principle is equally applicable to the situation where the two ranging devices are relatively close (such as illustrated in Fig. 3).

Fig. 4b represents an effect of an error in the AoA measurement. A first ranging device A according to an embodiment is making distance and AoA measurements with another ranging device (B - not shown) which is travelling along a path $p_B$ in order to estimate if and when B will cross its own path, $p_A$. Ranging device A has made a first measurement of a distance d1 and, from the AoA, $\Theta1$. At a later time, makes a second measurement of a distance d2 and angle $\Theta2$. From these measurements, ranging device A obtains an estimate of the velocity of B and attempts to estimate whether B will cross its own path and when. From this estimate, ranging device A may then estimate how close it will come to ranging device B - its closest approach distance, and at what time this is expected to occur.

Other parameters may then be used to generate an estimate of the collision risk. For example, the further away in time/distance, the greater the chance that the situation can change in some way, such as a change of speed or direction resulting in the collision not occurring. The closest approach distance may then be weighted with the estimated 'time to closest approach' - the lower the time, the greater the weighting factor. Though, the speeds of the ranging devices enter into the time to closest approach, they also influence the risk in another way. The faster one or both of the ranging devices is travelling, the less likely that it will/can change path. This means that current predictions are more likely to retain their initial accuracy and that the users of the ranging devices are less able to avoid each other. Therefore, the higher the speed of the ranging devices, the greater the weighting factor. In another variant, the speeds are used to attribute the ranging device according to one of the 5 categories of user, as discussed above, since their ability to change direction also increases as one goes down the list. The possible weighting factors may be used alone or in combination. Thus, the weighted closest approach distance may be compared to the thresholds, T1 and T2 described above.

From Figs 4A and 4B, it may be seen that an error in the angle measurement ($\delta \Theta$) of which ranging device A is unaware causes the location of B at that moment to be estimated incorrectly. Assuming the distance measurement is unaffected, the path of ranging device B, as estimated by ranging device A, is deviated by $\delta \Theta$ also with the consequence that a large error in the estimated point of intersection of pA and pB occurs, as represented by $\delta s$. This error $\delta s$ also translates into an error of the moment of closest approach. Where there is also an error in the distance measurement, this will be multiplied (rather than simply added to) the angle error - the distance b2, from the estimated location of B at measurement 2, to the place where the paths cross is given by (ignoring, for a moment, the motion):

$$b_2 = \sqrt{d_2^2 + a_2^2 - d_d.a_2.\cos\theta_2} \; . \qquad\qquad (2)$$

As may be seen, errors in the measurement of the angles can have significant consequences for the accuracy of the collision risk estimates. Ranging device A may be able to average out the angle measurement errors to some extent over multiple measurements. However, this will still leave an uncertainty in the estimate of the movements of ranging device B - seen as a spread in the estimate of the time and distance of closest approach. It is desirable that the alerts appear reliable to users i.e. that they only receive alerts when they perceive a collision as being likely, otherwise they will learn to ignore the alerts or even switch the system off altogether. Therefore, it may be useful to include the uncertainty of the estimate in the decision to generate an alert and/or how the alert is presented (for example, as a setting of alert level). Conversely, the more reliable the estimate (i.e. the lower the uncertainty), the more likely the system will be perceived as useful, and consequently be used. A possibility for reducing the uncertainty in the distance measurement may be to have each ranging device perform its own distance measurement, one after the other i.e. to make pairs of distance measurements. These could be collected by one of the ranging devices and averaged.

In a variant, the ranging device having the widest antenna array takes on the lead role in performing the angle measurements. In a variant, it performs the estimating time and distance of closest approach. To this end, that ranging device may use its own AoA measurements. Additionally, it may receive distance measurements from the other ranging device which it pairs with its own measurements for averaging. Alternatively, it provides the angle measurements to the other device which calculates the estimates. These roles and the dual-distance measurement may be negotiated during S4 when the two ranging devices exchange IDs and establish the connection. To this end, it would be convenient for each ranging device to be provided with configuration information representing the width of its antenna array (i.e. the maximum separation of its antennae). In this variant, the 'lead' ranging device could then proceed to do the calculating the estimation of the collision risk or it could provide the estimation of the time to and distance of the closest-approach to the other ranging device for calculating the collision risk estimate (should the other ranging device be equipped with or connected to more powerful processing). In a variant, the bicycle 6 (or mobility aid or the like) could be adapted by having the antenna array 21, 22 arranged on the frame of the bicycle to as to increase the antenna separation, in which case it may be more convenient to attach the ranging device to the bicycle 6, as opposed to having the user 5 carry it. An alternative to storing the actual antenna array width, the antenna array width could be stored as a classification or ranking (e.g. standard for phones, then 'bike width' and 'car width', represented by integers 1,2, 3 etc. or similar) - this would have the advantage of allowing smaller messages during the negotiation phase. In a variant, the ranging device advertises with which category of user it is associated (i.e. travelling with), in which case a vehicle-locate device could indicate in the negotiation that it will provide the angle values. This may simplify the negotiation. In a variant, it is programmed with this information. In another variant, it receives the information from a device with which it is communicating (such as the phone). Thus, the apparatus is arranged to provide and/or receive an antenna separation information with the second apparatus and negotiate that the apparatus with the greater antenna separation provides the angle value in the measurement. This allows the angle value having the greater accuracy to be used in the calculations. This contributes to a more reliable collision risk estimate and hence a more reliable system.

In a variant, a ranging device associated with a device equipped with satellite navigation (or connected to a device having satellite navigation capability) may use data from the navigation system to provide its trajectory and speed. This may often be the case with ranging devices associated with vehicle, such as automobiles. This information may either be used by the ranging device in the vehicle to calculate the estimation of the collision risk or provided as information to the other ranging device, the other ranging device being configured to use information in this form. In a variant, map data may be used to adjust the alert thresholds dynamically. For example, a vehicle estimating the collision risk and deciding whether to generate an alert may detect that the location of convergence of the two users is a traffic-light junction. In this case, the thresholds may be increased so that only where the other user is showing no sign of slowing is the alert generated.

Returning to Fig. 1, it can be seen that ranging devices 11 and 12 have a building in their path for at least some of time they are approaching the junction 8. This may reduce the ability of those ranging devices to make measurements (or even make it not possible). In a variant, ranging device 10 may combine location measurements has made for ranging devices 11 and 12 in order to estimate a time to distance of a closest approach of ranging devices 11 and 12. It may then provide this estimate (or an estimate of a collision risk) to one, other or both ranging devices 11 and 12. Data from the map may be used by the ranging device to detect the presence of obstructions like the building.

Thus, the first processor of the previously described apparatus is arranged to communicate at least on selected from group of the first measurement and the estimate to a third processor located in the vicinity of a third user. This has the advantage of providing an earlier warning to the other two users, who may still be unaware of the approach of the other.

In a variant, a ranging device may be arranged to store the type or category of vehicle it is installed (when it is installed in a vehicle). This may be used to adjust the thresholds T1 and T2 or inform the other device so that the alert provided to the user may contain the information.

In a variant, one or more of the speed and expected time of collision (i.e. when the closes-approach is expected to occur) may be communicated to the other ranging device for inclusion in the alert.

In a variant, a ranging device may be arranged to store information of the vulnerability of the user as a setting under the control of the user. The vulnerability information might be a simple flag. This may be used by the ranging device (or processor) evaluating the closest-approach time and distance to adjust the thresholds for alert generation. For example, this may form part of the settings of a device (e.g. the smartphone) which they are using and which contains or is connected to the ranging device. In a variant, the privacy settings of the device, as set by the user, may be used to switch from ephemeral to fixed IDs. Whilst opening up the risk of tracking, a fixed ID reduces the risk of errors in the overall process of establishing connections and making measurements. Users who already allow precise location of their smartphone may not worry about tracking.

In a variant, a train may be equipped with a ranging device which it enables whenever it nears a level-crossing or a station. This may be used to generate alerts for other users such as those preparing to cross the level-crossing.

The various features in the variants and embodiments may be combined in different combinations and descriptions of features together does not imply that they must always be employed together.

Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B.

Aspects of the embodiments may be implemented in a computer program product, which may be a collection of computer program instructions stored on a computer readable storage device which may be executed by a computer. The instructions may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors.

Storage media suitable for storing computer program instructions include all forms of nonvolatile memory, including but not limited to EPROM, EEPROM and flash memory devices, magnetic disks such as the internal and external hard disk drives, removable disks and CD-ROM disks. The computer program product may be distributed on such a storage medium, or may be offered for download through HTTP, FTP, email or through a server connected to a network such as the Internet.

**Claims**

1. An apparatus for reduction of a risk of a collision between a first user and a second user, the apparatus being located in a vicinity of the first user and arranged to cooperate with a second apparatus in the vicinity of the second user, the apparatus comprising

   - a first transceiver, being arranged to exchange first and second messages with a second transceiver comprised in the second apparatus;
   - a first processor operationally coupled to the first transceiver,
   wherein the first processor is arranged to communicate with the second processor via the first transceiver and wherein the first processor is arranged to
   - cause the first transceiver to participate with the second transceiver in making a first measurement, using the messages, the first measurement comprising a distance value, the distance value representing a distance between the first and second users, and an angle value, the angle value representing an angle of arrival (AoA) of the second message, the second message coming from the second transceiver and
   - obtain, based on the first measurement and a velocity of the first apparatus, an estimate of a possible collision between the first and second users and communicate at least one selected from the group of the estimate and the first measurement to the second processor.

2. The apparatus of claim 1 wherein the transceiver is operationally coupled to at least two antennae, the at least two antennae being spatially separated.

3. The apparatus of claim 2 wherein the apparatus is arranged to provide and/or receive an antenna separation information with the second apparatus and negotiate that the apparatus with the greater antenna separation provides the angle value.

4. The apparatus of any preceding claim wherein the first and second transceivers are arranged to use Ultra-Wide Band (UWB) communications and the first measurement is according to a UWB ranging protocol.

5. The apparatus of any preceding claim wherein the first processor is arranged to communicate at least on selected from group of the first measurement and the estimate to a third processor located in the vicinity of a third user.

6. The apparatus of any preceding claim wherein the first processor is arranged to use the first and second transceivers to obtain a plurality of measurements and obtain the estimate based on the plurality of measurements.

7. The apparatus of any preceding claim wherein the first processor is arranged to obtain the estimate using a map data.

8. The apparatus of any preceding claim wherein the first processor is arranged to provide an alert to the first user.

9. The apparatus of any preceding claim wherein the first processor is arranged to receive an indication from the second processor whether the user is located in an automobile and adjust a severity setting of the alert and/or the estimate sent to the third processor.

10. The apparatus of any previous claim wherein the first processor is arranged to provide an indication to other apparatuses of a category of user it is associated with.

11. The apparatus of any previous claim wherein the second processor is arranged to receive, from the first processor, an estimate, of a possible collision between the first and second users and to provide an alert to the user based on the estimate.

12. A method for reduction of a risk of a collision between first and second users, the method comprising:

    - using first and second apparatuses, the first and second apparatuses comprising respective first transceiver and second transceivers and first and second processors, the first and second apparatuses being located in the vicinity of the first and second users, respectively, to exchange first and second messages;
    - using first and second processors, the first processor being operationally coupled to the first transceiver and the second processor being operationally coupled to the second transceiver, to cause the first and second transceivers to make a first measurement, using the first and second messages, the first measurement comprising a distance value, the distance value representing a distance between the first and second transceivers and an angle value, the angle value representing an angle of arrival of the message from the other transceiver and
    using one of the processors to obtain, based on the first measurement and velocities of the processors, an estimate of a possible collision between the vehicle and the user.

13. The method of claim 12 wherein the obtaining of the estimate comprises making a plurality of measurements using further messages.

14. The method of either of claims 12 or 13 wherein at least one of the first and second transceivers is operationally coupled to an antenna array, the antenna array comprising at least two spatially separated antennae.

15. The method of claim 14 wherein at least one of the first and second processors obtains an information of the antenna separation of the antenna array of the other apparatus and wherein the two apparatuses negotiate to select the apparatus with the greater antenna separation to provide the angle value in the measurement.

16. The method of any of claims 12 - 15 wherein the obtaining of the estimate comprises using a map of vicinity to estimate the user's velocity.

17. The method of any of claims 12 - 16 comprising at least one selected from the first processor providing, based on the estimate, an alert to the first user and the second processor providing an alert to the user.

18. A computer program product which, when run on a processor according any of claims 1 - 11 causes the processor to perform the respective part of the method of claims 12 - 17.

Fig. 1

Fig 2

Fig. 3

Δ

d

θ

90-θ

Fig. 4a

A

δ Θ$_{p_A}$

a$_2$

δ s

Θ$_1$

Θ$_2$

d$_2$

b$_2$

b$_2$'

p$_B$'

d$_1$

p$_B$

Fig. 4b

Europäisches
Patentamt

European
Patent Office

Office européen
des brevets

# EUROPEAN SEARCH REPORT

**Application Number**

EP 23 21 9631

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/292973 A1 (ORLANDO MICHELE [IT] ET AL) 15 September 2022 (2022-09-15) | 1,2,4-6, 8,10-14, 17,18 | INV.<br>G01S5/00<br>G08G1/16 |
| Y | * abstract *; figures 1-6 * | 7,9,16 | |
| A | * paragraph [0001] - paragraph [0027] *<br>* paragraph [0036] - paragraph [0175] * | 3,15 | |
| | ----- | | |
| X | US 2022/317235 A1 (YE ZHENZHEN [US] ET AL) 6 October 2022 (2022-10-06) | 1,2,4,6, 12-14 | |
| Y | * abstract *; figures 14A-21 *<br>* paragraphs [0001], [0002] *<br>* paragraph [0041] - paragraph [0045] *<br>* paragraph [0055] - paragraph [0134] * | 7,9,16 | |
| | ----- | | |
| Y | US 2018/052005 A1 (SCHILLING ROBERT [US] ET AL) 22 February 2018 (2018-02-22)<br>* abstract *; figures 1-12 *<br>* paragraph [0001] - paragraph [0056] *<br>* paragraph [0068] - paragraph [0081] *<br>* claim 8 * | 7,16 | |
| | ----- | | **TECHNICAL FIELDS SEARCHED (IPC)** |
| Y | US 2023/087496 A1 (HWANG JAEHO [KR] ET AL) 23 March 2023 (2023-03-23)<br>* abstract *; figures 11, 15, 17, 20-25 *<br>* paragraph [0001] - paragraph [0027] *<br>* paragraph [0110] - paragraph [0230] * | 7,16 | G01S<br>G08G |
| | ----- | | |
| Y | WO 2016/127305 A1 (HARMAN INT IND [US]; MA JIANJUN [CN] ET AL.)<br>18 August 2016 (2016-08-18)<br>* abstract *; figures 1, 2 *<br>* paragraph [0002] - paragraph [0020] *<br>* paragraph [0030] - paragraph [0050] * | 9 | |
| | ----- | | |
| Y | US 2022/111792 A1 (BURMISTROV EVGENY [US] ET AL) 14 April 2022 (2022-04-14)<br>* abstract *; figures 7A, 7B *<br>* paragraph [0001] - paragraph [0007] *<br>* paragraph [0056] - paragraph [0063] * | 9 | |
| | ----- | | |

The present search report has been drawn up for all claims

| Place of search | Date of completion of the search | Examiner |
|---|---|---|
| Munich | 24 July 2024 | Zaneboni, Thomas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

Europäisches
Patentamt

European
Patent Office

Office européen
des brevets

**Application Number**

EP 23 21 9631

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**

**SHEET B**

Application Number

EP 23 21 9631

The Search Division considers that the present European patent application does not comply with the requirements of unity of invention and relates to several inventions or groups of inventions, namely:

```
1. claims: 1-6, 8, 10-15, 17, 18

        System and method for reduction of a risk of a collision
        between a first and a second user with means to improve the
        angle of arrival measurements.
                                 - - -

2. claims: 7, 16

        System and method for reduction of a risk of a collision
        between a first and a second user with further information
        concerning the risk reduction.
                                 - - -

3. claim: 9

        System and method for reduction of a risk of a collision
        between a first and a second user with improved user
        acceptance.
                                 - - -
```

## ANNEX TO THE EUROPEAN SEARCH REPORT
## ON EUROPEAN PATENT APPLICATION NO.

EP 23 21 9631

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2024

| Patent document cited in search report | Publication date | Patent family member(s) | | Publication date |
|---|---|---|---|---|
| US 2022292973 A1 | 15-09-2022 | AU | 2020317881 A1 | 17-02-2022 |
| | | BR | 112022000658 A2 | 22-03-2022 |
| | | CA | 3147394 A1 | 28-01-2021 |
| | | CN | 114096452 A | 25-02-2022 |
| | | EP | 3999384 A1 | 25-05-2022 |
| | | JP | 2022541301 A | 22-09-2022 |
| | | US | 2022292973 A1 | 15-09-2022 |
| | | WO | 2021014303 A1 | 28-01-2021 |
| US 2022317235 A1 | 06-10-2022 | CN | 117377884 A | 09-01-2024 |
| | | US | 2022317235 A1 | 06-10-2022 |
| | | WO | 2022211991 A1 | 06-10-2022 |
| US 2018052005 A1 | 22-02-2018 | CN | 109791565 A | 21-05-2019 |
| | | CN | 117290456 A | 26-12-2023 |
| | | EP | 3500944 A1 | 26-06-2019 |
| | | EP | 4354324 A2 | 17-04-2024 |
| | | US | 2018052005 A1 | 22-02-2018 |
| | | US | 2019056238 A1 | 21-02-2019 |
| | | WO | 2018034861 A1 | 22-02-2018 |
| US 2023087496 A1 | 23-03-2023 | KR | 20220154703 A | 22-11-2022 |
| | | US | 2023087496 A1 | 23-03-2023 |
| | | WO | 2021182934 A1 | 16-09-2021 |
| WO 2016127305 A1 | 18-08-2016 | NONE | | |
| US 2022111792 A1 | 14-04-2022 | NONE | | |

EPO FORM P0459

For more details about this annex : see Official Journal of the European Patent Office, No. 12/82